# EUROPEAN PATENT APPLICATION

(11) **EP 2 477 107 A1**
(43) Date of publication of application: **18.07.2012**
(21) Application number: 11275011.2
(22) Date of filing: 14.01.2011
(51) Int. Cl.: G06F 3/06, H04L 29/08, B64C 39/02

(54) **Data transfer system and method thereof**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A data transfer system is provided for an unmanned vehicle on a mission. The data transfer system comprises a first sensor associated with the unmanned vehicle and which collects a first data set, a second sensor associated with the unmanned vehicle and which collects a second data set, wherein the second data set is associated with the first data set by a predetermined association, and a transceiver for transmitting data from the unmanned vehicle to a remote data storage system. The system further comprises a mass data storage computer that is located on the unmanned vehicle which stores the first and second data sets based on the predetermined association. The mass data storage computer receives and executes requests from the remote data storage system to transmit the first data set from the unmanned vehicle to the remote data storage system. The mass data storage computer further receives and executes requests from the remote data storage system to transmit selected ones of the second data set from the unmanned vehicle to the remote data storage system. Also, the mass data storage computer is removably connectable to the unmanned vehicle such that at the end of the mission the mass data storage computer can be removed from the unmanned vehicle and connected to the remote data storage device to download any data which has not already been transmitted.

## Description

The present invention relates to a data transfer system and in particular to a data transfer system for an unmanned aerial vehicle (UAV). The present invention also relates to a method of extracting data from an unmanned aerial vehicle.

### INTRODUCTION

Autonomous vehicles such as unmanned aircraft vehicles (UAV) or unmanned ground vehicles (UGV) are increasingly used in military applications, but are also used in a small but growing number of civil applications such as non-military security work, police forces, surveillance of pipelines in the oil and gas industry, traffic control and search and rescue missions. UAVs are reusable, uncrewed or unmanned vehicles capable of controlled, sustained and level flight, and are usually powered by a jet or a reciprocating engine. Currently, the largest use of UAVs is in military applications such as reconnaissance, i.e. preliminary or exploratory military surveys, as well as attack missions. UAVs may fulfill other functions including remote sensing which is central to the reconnaissance role of a UAV. Less common UAV functions may include interaction and transport missions.

UAV remote sensing functions may be carried out using electromagnetic spectrum sensors, biological sensors and/or chemical sensors. These electromagnetic sensors typically use visual spectrum, infrared, or near infrared cameras as well as radar systems. Other electromagnetic wave detectors, such as microwave and ultraviolet spectrum sensors, may also be used, but are less common.

In a typical reconnaissance mission, a UAV may capture images or video using a camera. Each of the images may be accompanied by specific data relating to the current position and attitude of the vehicle (i.e. pitch, roll and heading angles of the vehicle), the position and attitude of the camera relative to the vehicle, as well as predetermined installation angles of the camera (i.e. pitch, roll and heading of the camera relative to the vehicle) and the properties of the camera and the lens. The specific data is referred to as geolocated image footprints and may further include the latitude, longitude and altitude of the area captured at the four corners of the image. This data makes it possible to determine the location of each pixel in the image. As a result, a substantial amount of data is generated for each of the images and respective geolocated image footprints, wherein the size of the image data itself may be 99.9% and the size of the image footprint may be 0.1 % of the total data size. Typically, the acquired image data is stored in a data storage device on board the UAV, wherein the data storage device may be a simple disk drive or a small, removable solid state flash memory card. After a mission (*post sortie*) and once the UAV has landed, the data can be extracted from the removable solid state flash memory cards by inserting the cards into dedicated ground equipment for download. However, typically flash memory cards have limited capacity and the memory card access is relatively slow thus making flash memory card data storage unsuitable for the large amounts of data required for the geolocated images.

The data may also be downloaded after an operational flight by a military aircraft via a physical connection between the data storage device of the UAV and a ground control station (GCS). Due to the large amounts of data the download can take several hours and requires the aircraft to be powered and parked near the ground control station (GCS). This can cause delays in the turnaround and servicing of the aircraft, potentially blocking the taxiway and using unnecessary amounts of fuel while cooling the aircraft during taxiing and download of the data. Military intelligence may be affected due to any delay in receiving critical data, which may only be provided after the return of the UAV and download of the data.

Accordingly, it would be desirable to eliminate one or more of the above problems by providing a data transfer system that provides immediate access to at least part of the stored data and which minimizes the time required to transfer the data from a UAV to a ground control station (GCS).

### SUMMARY OF THE INVENTION

According to a first aspect of the present invention, there is provided a data transfer system for an unmanned vehicle on a mission, the data transfer system comprising:
a first sensor associated with the unmanned vehicle and which collects a first data set;
a second sensor associated with the unmanned vehicle and which collects a second data set, wherein the second data set is associated with the first data set by a predetermined association;
a transceiver for transmitting data from the unmanned vehicle to a remote data storage system;
a mass data storage computer located on the unmanned vehicle which stores the first and second data sets based on the predetermined association;
   wherein the mass data storage computer receives and executes requests from the remote data storage system to transmit the first data set from the unmanned vehicle to the remote data storage system;
   wherein the mass data storage computer receives and executes requests from said remote data storage system to transmit selected ones of the second data set from the unmanned vehicle to the remote data storage system; and
   wherein the mass data storage computer is removably connectable to the unmanned vehicle such that at the end of the mission the mass data storage computer can be removed from the unmanned vehicle and connected to the remote data storage device to download any data which has not already been transmitted.

This provides the advantage that important and critical data can be provided to a remote data storage system at a remote ground control station (GCS) while the vehicle is still carrying out its mission. Furthermore, the system of the present invention provides the advantage that a predetermined mission plan can be altered in response to the data received at the GCS, which significantly improves the effectiveness and efficiency of the vehicle. In addition, the removably connectable mass data storage computer of the system of the present invention provides the advantage that UAV preparation time for a new subsequent mission and data download time is minimised.

The transceiver may be adapted to provide a wireless data transfer link to the remote data storage system.

This provides the advantage that data can be transferred to a remote data storage system without the need for a physical connection from any location.

The predetermined association may be based on a uniquely assigned tag.

The predetermined association may be chronological such as based on a time stamp.

This provides the advantage that each one of the captured images can be allocated to its corresponding geolocated footprint, i.e. GPS data, vehicle, speed, orientation, altitude etc, via a distinct chronological marker provided by a timer or clock or a uniquely assigned tag, for example a name tag that is the same for the associated image and footprint.

The mass data storage computer may comprise a physical interface connector adapted to connect to both the unmanned vehicle and the remote data storage system.

This provides the advantage that, after returning from a mission, the mass data storage computer can be removed and physically connected to the remote data storage computer of the ground control station where accumulated data can be extracted at a maximum speed via the physical connection. This minimising the time required to download the data from the unmanned vehicle to the data storage system at the ground control station.

The mass data storage computer may compress the first data set and/or the selected ones of the second data set prior to transmission via the transceiver.

This provides the advantage that the data size is minimized prior to transmission via the transceiver, thus, further improving throughput.

The first data set may comprise geolocated data and the second data set may comprise imaging data. The geolocated data may comprise real-time tracking data of the unmanned vehicle and the orientation of the second sensor with respect to the unmanned vehicle.

This provides the advantage that each of the captured images can be allocated to an exact location including essential data about the vehicles orientation and movement within a defined space.

The first sensor may comprise a global positioning system and/or an inertial navigation system. The second sensor may comprise a camera adapted to capture images and/or video.

According to a second aspect of the present invention, there is provided a method of extracting data from the data transfer system previously described, comprising the steps of:
(i) receiving a first data set and a second data set and associating the second data set to the first data set according to a predetermined association;
(ii) storing the first data set and the associated second data set in a mass data storage computer;
(iii) receiving and executing requests from a remote data storage system and transmitting the first data set to the remote data storage system via the transceiver;
(iv) receiving and executing requests from the remote data storage system and transmitting selected ones of the second data set to the remote data storage system via the transceiver;
(v) at the end of the mission, removing the mass data storage computer from the unmanned vehicle and connecting the mass data storage computer to the remote data storage system via a physical interface connection and downloading any data which has not already been transmitted.

The method may further comprise the step of connecting a second, formatted mass data storage computer to the unmanned vehicle in the place of the removed mass data storage computer.

This provides the advantage that a mass data storage computer can be pre-prepared for a subsequent mission of a UAV and readily provided to the UAV as soon as it returns from its previous mission, therefore, minimizing the time required for preparing the UAV for its next mission.

According to a third aspect of the present invention, there is provided a computer readable storage medium storing a program of instructions to a computer, wherein the instructions are adapted to execute the method previously described.

According to a fourth aspect of the invention, there is provided a system, method and software readable medium according to any one of the figures.

### BRIEF DESCRIPTION OF THE DRAWINGS

A preferred embodiment of the present invention will now be described, by way of example, with reference to the accompanying drawings, in which:
**Figure 1** shows a schematic illustration of an overview of the UAV data transfer system architecture, in accordance with an embodiment of the present invention;
**Figure 2a** shows a schematic illustration of the mass data storage computer of the data transfer system of Figure 1;
**Figure 2b** shows a schematic illustration of a signal concentrator of the data transfer system of Figure 1;
**Figure 3** shows a block diagram of the data transfer system of the present invention;
**Figure 4** shows an operational illustration of the data transfer system of the UAV communicating with a remote data storage system at a ground control station via a wireless data transfer link in accordance with an embodiment of the present invention;
**Figure 5** shows a block diagram depicting the removal of the mass data storage computer from the data transfer system of the UAV and subsequent connection to a data cradle of a remote data storage system at a ground control station;
**Figure 6** shows a block diagram of the mass data storage computer connected to the data cradle of the remote data storage system at the ground control station;
**Figure 7** shows a block diagram of the system architecture of the mass data storage computer connected to the data cradle of the data storage system at the ground control station;
**Figure 8** shows a flow diagram for the management of the data flow, in accordance with an embodiment of the present invention.

### DETAILED DESCRIPTION OF EMBODIMENTS

### On-board architecture:

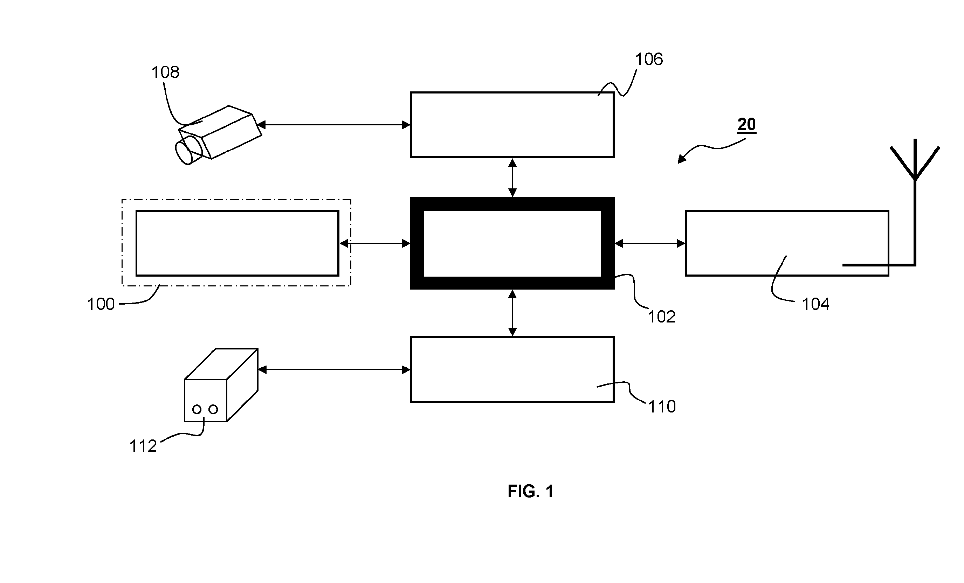

In use and on-board the UAV **10,** the mass data storage computer **100** is removably connected to the data transfer system **20** of the UAV **10** via a network switch **102.** The network switch **102** forms a central part of the data transfer system **20** for interaction between the mass data storage computer **100** and any other peripheral system. The mass data storage computer **100** is mounted within the UAV **10** such that it can be easily removed from the data transfer system **20** without the need for tools. The UAV **10** is adapted to provide the required power and sufficient cooling for the on-board equipment, including the mass data storage computer **100.** Figure 1 shows a simplified example of the system architecture of the data transfer system **20** on-board the UAV **10** and the removable mass data storage computer **100.** Typically, the data transfer system **20** comprises a wireless transceiver **104,** a first signal concentrator **106** connected to at least one camera **108** by a camera specific interface. The signal concentrator 106 is capable of receiving signals of different standards and "concentrates" the signals in to a common interface that is supported by the rest of the data transfer system 20. In this particular example, the signal concentrator 106 takes in 'CameraLink' to interface with the cameras 108 and MIL-STD 1553 (interface standard) to interface with the LINS (Laser Inertia Navigation System) (not shown), and provides 'Ethernet' connection that is supported by the data transfer system 20. Also the data transfer system **20** includes a second signal concentrator **110** connected to the network switch **102** and suitable for connection with, for example, a GPS or inertial navigation system. The signal concentrators **106, 110** provide a specific interface for the camera **108,** and the GPS and inertial navigation system **112** (GPS/INS) to the network switch **102.** Also, both signal concentrators 106 and 110 could be amalgamated into a single signal concentrator that performs both camera and LINS interface functions.

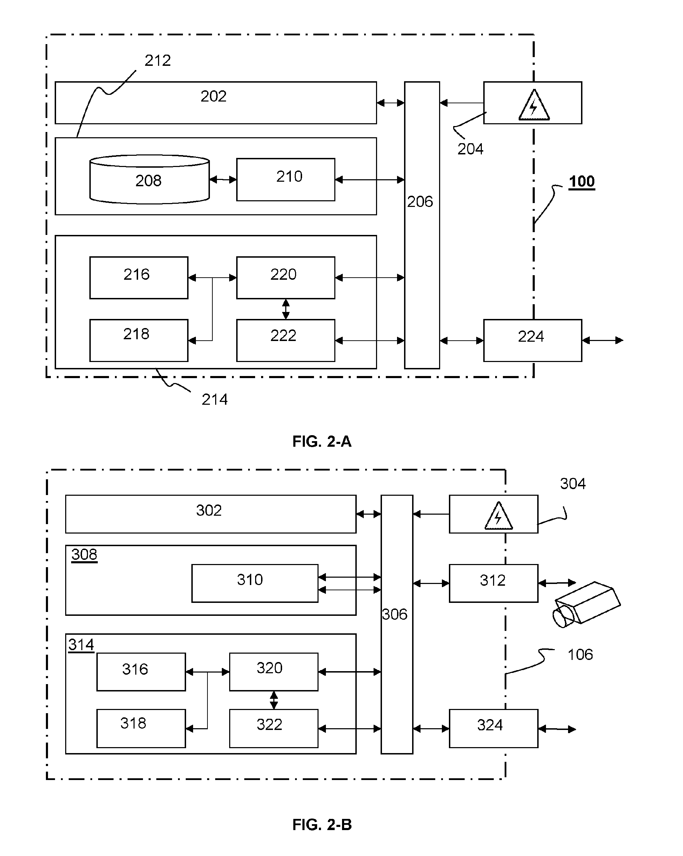

Referring to Figure 2 (a), the mass data storage computer **100** may include a power supply unit **202** connected to a power connector **204** via a backplane **206.** A solid state disk **208** and a serial advanced technology attachment (SATA) controller **210** are coupled to a solid state disk board **212** which is connected to the backplane **206.** A single board computer **214** comprises a processor **216,** a memory **218,** a bridge **220** and a network controller **222,** the latter two being connected to the backplane **206.** The backplane **206** connects to a network connector **224** adapted to connect to the network switch **102** in Figure 1. The mass data storage computer **100** is connected to the first signal concentrator **106** by the network switch **102** as disclosed in Figure 1.

Referring to Figure 2 (b), the signal concentrator **106** may comprise a power supply unit **302** connected to a power connector **304** via a backplane **306.** A camera interface board **308** includes a camera controller **310** which is connected to a camera connector **312** via the backplane **306.** A single board computer **314** comprises a processor **316,** a memory **318,** a bridge **320** and a network controller **322,** the latter two being connected to the backplane **306.** A network connector **324,** which is the physical connector that carries the `Ethernet' from the single board computer to the external shell of the box and is adapted to connect to the network switch **102** in Figure 1.

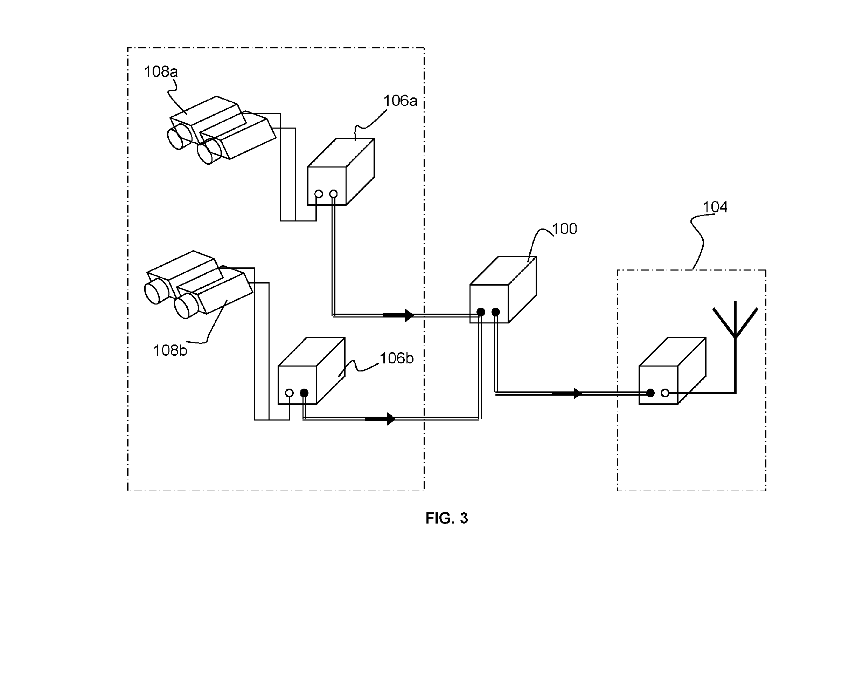

As shown in Figure 3, the mass data storage computer **100** is in communication with a first and second camera **108a, 108b** via respective first signal concentrators **106a** and **106b.** The mass data storage computer **100** also has access to the wireless transceiver **104** through which data can be transmitted to and received from a remote ground control station.

### On-board operation:

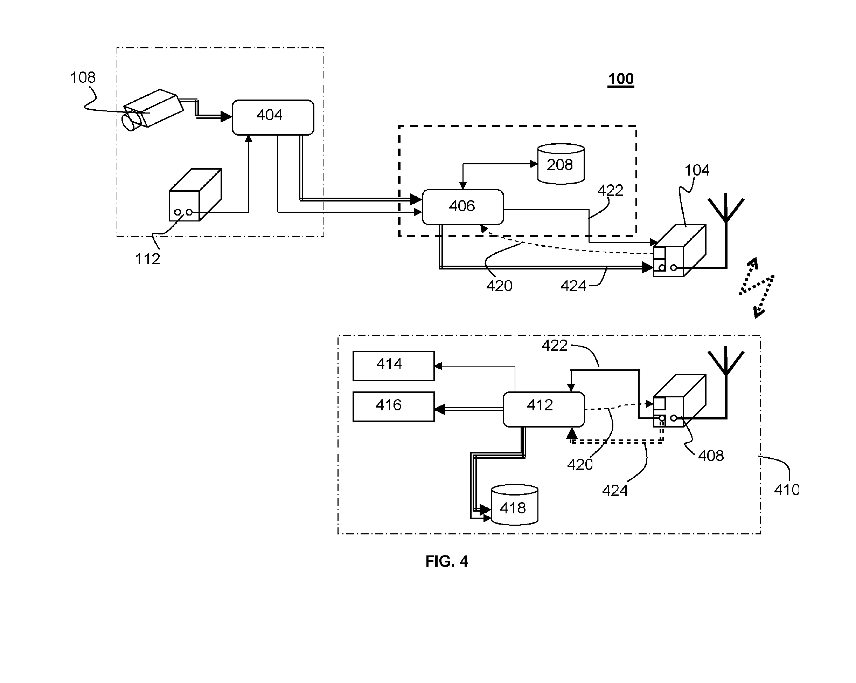

The operation of a preferred embodiment of the invention will now be described with reference to Figure 4. Whilst on a reconnaissance mission, images are captured from the camera **108** and each image is geolocated. The geolocated image footprint and the camera images are associated in a 1:1 relationship. For example, a footprint named '*footprint0001*' *may* be directly associated to an image having a similar filename, e.g. '*image0001*'. The footprint further contains a timestamp along with the other data required to geolocate the associated image. The geolocated image footprint is determined from the current vehicle position and altitude (e.g. pitch, roll and heading angles of the vehicle) derived from the GPS and inertial navigation system (GPS/INS) **112** and the known installation angles of the camera **108** (e.g. pitch, roll and heading of the camera **108** relative to the vehicle **10**). The geolocated image footprint is then generated further containing, for example, latitude, longitude and altitude of the four corners of the area captured by each image. The footprint is then associated to its respective image through an image capture module **404.** The image capture module 404 comprises software that manages the capture of the images. For example, the system takes a picture and records the data required to perform geolocation at the time the picture was taken, so that each image is accompanied by a file containing, *inter alia,* aircraft position and camera properties and position relative to the aircraft. The generated image data from the camera **108** and the geolocated image footprint is then sent to the store manager **406** of the mass data storage computer **100** to be stored in an uncompressed state onto the internal storage, such as a solid state disk **208.** This helps to preserve the original quality of image.

The geolocated image footprints **422** of all images captured thus far are then transmitted to an image manager **412** via the wireless transceiver **104** of the UAV **10** and the wireless transceiver **408** of the remote data storage system at the ground control station **410.** The captured images are displayed on a map **414** to illustrate the images exact position and orientation. After review of the footprints, an operator can request a wireless download of specific images preselected from the mapped geolocated image footprints. A request **420** is sent via the wireless transceivers **408, 104** to the store manager **406,** which retrieves the requested image data from the internal storage **208.** The image data is then compressed to reduce the amount of data so that it is suitable for wireless transmission with the transceivers **408, 104.** The compressed image data **424** is transmitted to the image manager **412** at the remote control station **410** via the wireless transceivers **104, 408.** The data may be compressed by a JPEG2000 standard compression or any other suitable compression standard. The image manager **412** at the ground control station **410** decompresses the received compressed image data **424** and stores the decompressed image on a local data storage **418** where it is available for the image display **416** and/or map display **414.** This method allows a fast and reliable transfer of specific images from a UAV **10** to a remote ground control station **410** so that critical information can be made available without having to return the UAV **10** to its ground control station. The critical information may also be used to generate alternative mission plans for the UAV **10,** which is then transmitted from the ground control station via the wireless transceivers **408, 104.** This helps to improve the quality of the captured data and maximizes the efficiency of each mission.

### Post-sortie data extraction

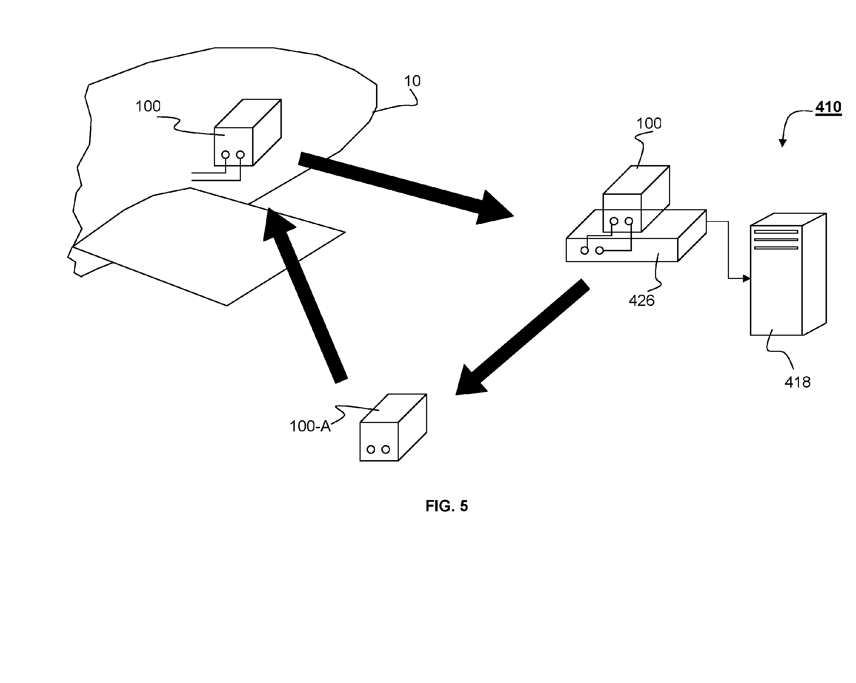

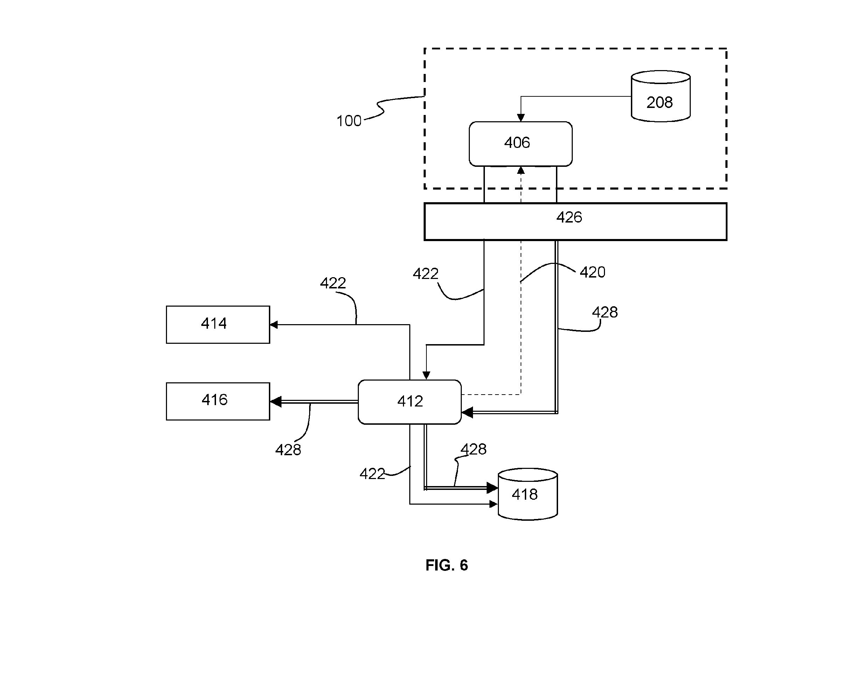

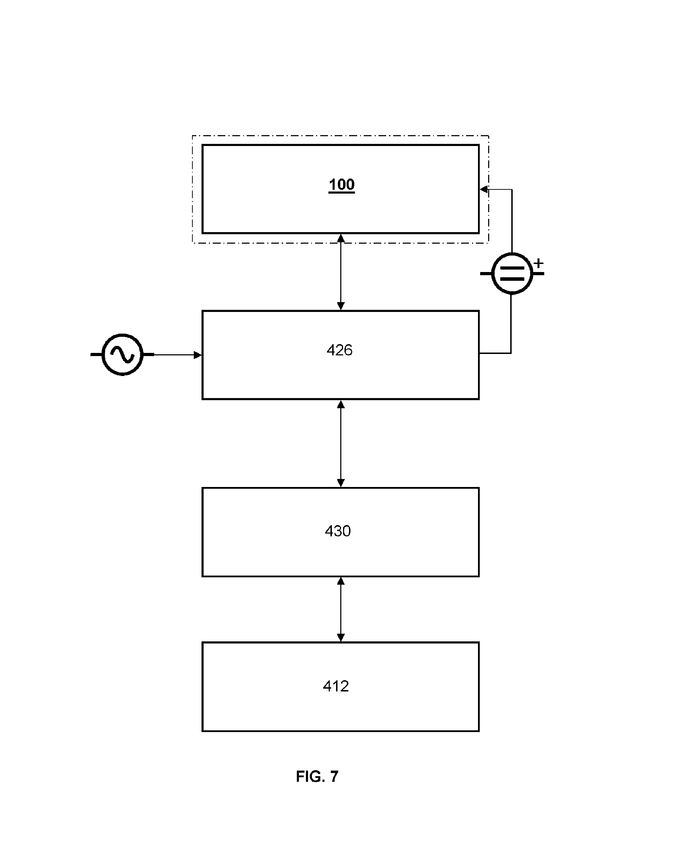

The *post sortie* download operation will now be described with reference to Figures 5 to 7. After the return of the UAV **10** to the ground control station **410,** the filled mass data storage computer **100** is removed from the data transfer system **20** of the UAV **10** and a replacement mass data storage computer is installed to the UAV **10** for a new mission. The filled mass data storage computer **100** is then connected to a cradle **426** of the data storage system at the ground control station for download. The cradle **426** ideally includes an interface electrically and mechanically identical to that on the data transfer system **20** of the UAV, a power source, cooling arrangements and network connections **430.** Once mounted in the cradle **426,** the data **428** stored on the mass data storage computer **100** is downloaded to an external storage module **418.** The cradle **426** provides a mechanism to allow the mass data storage computer **100** to be interfaced with the ground control station equipment. The cradle **426** is directly coupled to an image manager **412** by a direct network connection. The image manager **412** is in communication with the external storage module **418,** the map display **414** and image display **416** of the ground control station **410** thereby downloading the image data without having to compress it.

In operation, the image manager **412** is capable of automatically detecting a physical connection with the mass data storage computer **100.** This causes the image manager **412** to connect to the store manager **406** and requests the geolocated image footprints to be downloaded. After receiving the image footprints, the image manager **412** requests the uncompressed image data associated with each geolocated image footprint and stores the uncompressed image data in local storage module **418.** After downloading all data, the mass data storage computer **100** is formatted for its next mission by erasing all data from the device.

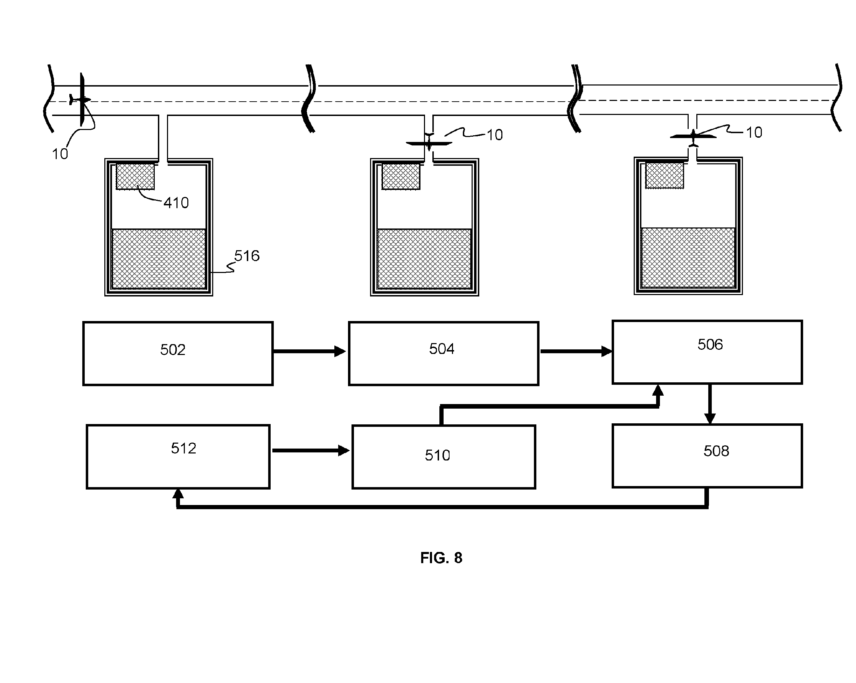

A typical UAV **10** landing and data extraction procedure is described in a step-by-step sequence with reference to Figure 8. The UAV **10** lands (step **502**) on the runway **514** and taxies (step **504**) to the entrance of a hanger **516.** The mass data storage computer **100** is removed (step **506**) and a "clean", newly primed mass data storage computer **100** is fitted (step **510)** to the UAV **10.** The UAV **10** is then refueled and readied for the next mission (step **506**). The mass data storage computer **100** that was removed is taken to the data storage system (step **508**) at the ground control station **410,** where it is fitted to the cradle **426** for data download formatting and data deletion (step **512**).

In summary, the mass data storage computer **100** of the present invention allows for a reduced workload in aircraft servicing and reduced vehicle operator personnel. The reduced time for the UAVs **10,** to be prepared for the next mission is minimized. The risk of airfield obstruction is also minimized and there are reduced environmental impacts. More importantly, the improved data transfer, either selectively while still on a mission, or through physical exchange of the mass data storage computers **100,** allows critical data to be provided in a more efficient and flexible manner.

It is clear that any other types of autonomous vehicle suitable for unmanned or manned operations may be used instead of the UAV. Examples include unmanned ground vehicles (UGV) or unmanned underwater vehicles. The described system may be used for transfer of data beyond the scope described above. For example, the system may be adapted to use with video data and 'black box' data. Also, the mass data storage computer **100** may be used to download mission data such as a predetermined flight path and specific locations for image capture. The mission path of the UAV **10** may be adjusted or updated by sending relevant instructions to the UAV **10** via the wireless transceiver **104, 408,** based on the download data.

It will be appreciated that the above embodiment has been described by way of example only and not in any limitative sense, and that various alterations and modifications are possible without departing from the scope of the invention as defined by the appended claims. The various functions described above could be implemented by software, hardware or a combination thereof. For example, software modules for specific functions may be replaced by hardware able to perform such function and vice versa.

## Claims

1. A data transfer system for an unmanned vehicle on a mission, the data transfer system comprising:
a first sensor associated with the unmanned vehicle and which collects a first data set;
a second sensor associated with the unmanned vehicle and which collects a second data set, wherein the second data set is associated with the first data set by a predetermined association;
a transceiver for transmitting data from the unmanned vehicle to a remote data storage system;
a mass data storage computer located on the unmanned vehicle which stores the first and second data sets based on the predetermined association;
wherein the mass data storage computer receives and executes requests from the remote data storage system to transmit the first data set from the unmanned vehicle to the remote data storage system;
wherein the mass data storage computer receives and executes requests from said remote data storage system to transmit selected ones of the second data set from the unmanned vehicle to the remote data storage system; and
wherein the mass data storage computer is removably connectable to the unmanned vehicle such that at the end of the mission the mass data storage computer can be removed from the unmanned vehicle and connected to the remote data storage device to download any data which has not already been transmitted.

2. A data transfer system according to claim 1, wherein the transceiver is adapted to provide a wireless data transfer link to the remote data storage system.

3. A data transfer system according to any one of the preceding claims, wherein the predetermined association is based on a uniquely assigned tag.

4. A data transfer system according to claims 1 or 2, wherein the predetermined association is chronological such as based on a time stamp.

5. A data transfer system according to any one of the preceding claims, wherein the mass data storage computer comprises a physical interface connector adapted to connect to both the unmanned vehicle and the remote data storage system.

6. A data transfer system according to any one of the preceding claims, wherein the mass data storage computer compresses the first data set and/or the selected ones of the second data set prior to transmission via the transceiver.

7. A data transfer system according to any one of the preceding claims, wherein the first data set comprises geolocation data and the second data set comprises image data.

8. A data transfer system according to claim 7, wherein the geolocation data comprises real-time tracking data of the unmanned vehicle and the orientation of the second sensor with respect to the unmanned vehicle.

9. A data transfer system according to any one of the preceding claims, wherein the first sensor comprises a global positioning system and/or an inertial navigation system.

10. A data transfer system according to any one of the preceding claims, wherein the second sensor comprises a camera adapted to capture images and/or video.

11. A method of extracting data from the data transfer system of any one of claims 1 to 10, comprising the steps of:
(i) receiving a first data set and a second data set and associating the second data set to the first data set according to a predetermined association;
(ii) storing the first data set and the associated second data set in a mass data storage computer;
(iii) receiving and executing requests from a remote data storage system and transmitting the first data set to the remote data storage system via the transceiver;
(iv) receiving and executing requests from the remote data storage system and transmitting selected ones of the second data set to the remote data storage system via the transceiver;
(v) at the end of the mission, removing the mass data storage computer from the unmanned vehicle and connecting the mass data storage computer to the remote data storage system via a physical interface connection and downloading any data which has not already been transmitted.

12. A method according to claim 11, wherein the predetermined association is based on a uniquely assigned tag.

13. A method according to claim 11, wherein the predetermined association is chronological such as based on a time stamp.

14. A method according to claims 11 to 13, wherein the first data set and/or the selected ones of the second data set are compressed prior to transmission via the transceiver.

15. A method according to claims 11 to 14, further comprising the step of providing updated mission control data to the unmanned vehicle via the transceiver.
